# EUROPEAN PATENT SPECIFICATION

(11) **EP 0 454 179 B1**
(45) Date of publication and mention of the grant of the patent: **08.03.1995**
(21) Application number: 91109998.4
(22) Date of filing: 21.06.1984
(51) Int. Cl.: B01J 19/32, F28F 25/08, F28C 1/02, B01D 53/18

(54) **Tower packing grid**
Füllkörper für einen Kühlturm
Eléments de remplissage pour une tour de refroidissement

(30) Priority: 21.06.1983 US 506417; 21.06.1983 US 506534
(43) Date of publication of application: 30.10.1991
(62) Divisional of application: 88111949.9
(73) Proprietor: GLITSCH, INC., Dallas Texas 75212 (US)
(72) Inventor: Chen, Gilbert, Farmers Branch, Texas 75234 (US); Glaspie, Donald L., Dallas, Texas 75229 (US); Kitterman, B. Layton, Gainesville, Texas 76240 (US); Axe, John R., Arlington, Texas 76012 (US)
(74) Representative: Hitchcock, Esmond Antony

(56) References cited:
- EP-A- 0 072 875
- EP-A- 0 158 917
- DE-A- 1 913 016
- DE-A- 2 032 292
- DE-B- 1 283 250
- FR-A- 1 193 405
- FR-A- 2 027 505
- FR-A- 2 086 365
- FR-A- 2 134 377
- FR-A- 2 301 284
- GB-A- 2 097 282

## Description

The present invention relates to vapour-liquid contact packing and, more particularly, to tower packing grid of the type comprising a plurality of corrugated metal sheets in face-to-face contact with opposed corrugations inclined oppositely one to the other for receiving a descending liquid flow concomitantly with an ascending vapour flow to enhance the vapour-liquid contact therebetween, the sheets including a plurality of spaced apart elongate openings spaced longitudinally from one another in parallel rows with the longitudinal axes of the openings extending transversely across the corrugations to distribute liquid across both sides of the sheets. Such tower packing material is described in for example, DE-A-2 032 292. It is also described in EP-A-0 130 745, to which reference is directed.

EP-O 130 745 includes discussion of previously known vapour-liquid process towers, and tower packing used therein. Particularly, it acknowledges the widespread established practice of using passive vapour-liquid contact devices with sheets of material in face-to-face engagement in such process towers. The packing described in DE-2 032 292 has sheets in strip form with their corrugations inclined alternately in opposite directions relative to a vertical plane. The sheets are formed with apertures in the form of openings which will normally extend over the crests of the corrugations. Reference is also directed to DE-A-1 913 016 which also discloses tower packing broadly of the type described above with corrugated metal sheets in face to face contact. The corrugations are inclined laterally in opposite directions; with apertures in the form of openings extending over the crests of the corrugations. The present invention is directed at contact devices of the above type and in which a tower packing grid comprises a plurality of corrugated metal sheets in face-to-face contact with opposed corrugations inclined oppositely one to the other for receiving a descending liquid flow concomitantly with an ascending vapour flow to enhance the vapour-liquid contact therebetween. The sheets include a plurality of spaced apart elongate openings spaced longitudinally from one another in parallel rows with the longitudinal axes of the openings extending transversely across the corrugations to distribute liquid across both sides of the sheets. According to the invention, the openings are in the form of slits adapted to provide a capillary effect resulting in lateral diversion and entrainment of liquid descending over the sheets to spread the liquid across the surface area of the sheets and produce enhanced vapour-liquid contact. The slits in adjacent rows are preferably longitudinally offset from one another into alignment with the spaces between the slits. Each slit may include a coined portion.

The invention will now be described by way of example and with reference to the accompanying schematic drawings wherein:
Figure 1 is a cross-sectional view of a process tower in which the grid of the invention may be utilised;
Figure 2 is a perspective view showing a portion of a grid in accordance with the invention;
Figure 3 is a plan view of a semi finished blank for forming a corrugated plate for use in the grid of the invention; and
Figure 4 shows the blank of Figure 3 corrugated for use in the grid of the invention.

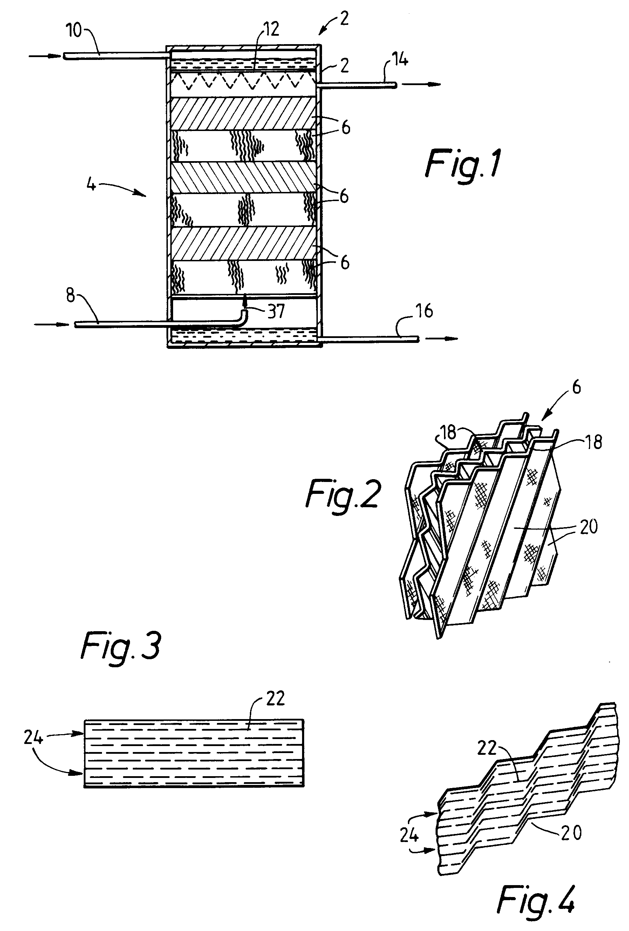

Figure 1 shows a process column 2 having a stack 4 of grid layers 6 constructed generally in accordance with the principles of the present invention. The grid layers are comprised of a plurality of plate sections such as that shown in Figure 4. The outer periphery of the multiple layers is contoured to fit within the process tower 2 which, as shown, is circular in cross-section. Adjacent grid layers within the column are preferably oriented orthogonally one to the other to further enhance the vapour-liquid contact and turbulence of fluids passing therethrough.

The process column 2 is constructed for affording the entry of vapour through a lower vapour flow line 8 positioned near the bottom of the column. The upper region of the column 2 is likewise fitted with a liquid flow line 10 for affording the ingress of the liquid to be processed within said column. The liquid entry from the fluid flow line 10 is dispersed across the upper grid layers 6 by spray or dispension heads 12 to initiate homogeneous, descending liquid flow patterns across the stacked grids. Similarly, the vapour is introduced in the lower regions of the column for homogeneous distribution therearound and the ascension thereof through the stacked grid layers for heat and/or mass transfer with the descending liquid. The vapour is vented near the top of the column 2 through exhaust line 14 while the excess liquid collected at the bottom of said column is permitted to drain through line 16. The technique of such column operation is well known in the prior art and is, for example, set forth and shown in U.S. Patent Nos. 3,959,419 and 3,969,447.

The grid portion shown in Figure 2 comprises adjacent corrugated plate members 18 stacked against one another in engagement across the corrugation edge portions. A plurality of flow channels 20 are thus formed in the grid, which channels are relatively open across the notional plane between contiguous members 18. The corrugations of contiguous members are inclined oppositely, one to the other, for providing an opposed flow of vapour and liquid across the intermediately disposed plates.

Figure 3 shows a top plan view of a material blank of slit construction for utilisation in the present invention. It has a plurality of slits formed in parallel space relationship and staggered one to the other along a longitudinal direction for affording a laminar fluid flow when disposed in a vertical configuration. The plate includes slits 22 formed in rows 24 generally in parallel spaced relationship, and which may each include a coined portion. The slits 22 formed therein may be seen to provide various advantageous capillary effects and lateral entrainment of the liquid descending thereacross for purposes of vapour liquid interface reaction.

The material blank of Figure 3 is shown in a corrugated configuration in Figure 4; ie, in the form in which it is used in a packing grid according to the invention.

## Claims

1. A tower packing grid comprising a plurality of corrugated metal sheets (18) in face-to-face contact with opposed corrugations (20) inclined oppositely one to the other for receiving a descending liquid flow concomitantly with an ascending vapour flow to enhance the vapour-liquid contact therebetween, the sheets (18) including a plurality of spaced apart elongate openings spaced longitudinally from one another in parallel rows with the longitudinal axes of the openings extending transversely across the corrugations to distribute liquid across both sides of the sheets,
CHARACTERISED IN THAT
the openings are in the form of slits (22) adapted to provide a capillary effect resulting in lateral diversion and entrainment of liquid descending over the sheets to spread the liquid across the surface area of the sheets and produce enhanced vapour-liquid contact.

2. A tower packing according to Claim 1 CHARACTERISED IN THAT the slits (22) in adjacent rows are longitudinally offset from one another into alignment with the spaces between the slits.

3. A tower packing according to Claim 1 or Claim 2 CHARACTERISED IN THAT each of the slits (22) includes a coined portion.

## Patentansprüche

1. Füllkörper für einen Kühlturm, enthaltend mehrere gefaltete Metallbleche (18) die direkt gegenüber von entgegengesetzten Faltungen (20) in Berührung mit diesen angeordnet sind, wobei sie entgegengesetzt zueinander geneigt sind, um einen abströmenden Flüssigkeitsstrom gleichzeitig mit einem aufsteigenden Dampfstrom aufzunehmen, um den Dampf-Flüssigkeits-Kontakt zwischen ihnen zu verbessern, wobei die Bleche (18) mehrere einzeln beabstandete, längliche Öffnungen besitzen, die in Längsrichtung voneinander beabstandet sind und parallele Reihe bilden, wobei die Längsachsen der Öffnungen sich quer über die Faltungen erstrecken, um die Flüssigkeit über beide Seiten der Bleche zu verteilen,
**dadurch gekennzeichnet, daß**
die Öffnungen die Form von Schlitzen (22) haben, die geeignet sind, einen Kapillareffekt zu bewirken, der zu einer seitlichen Verteilung und einem Mitreißen von Flüssigkeit führt, die über die Bleche hinunterfließt, um die Flüssigkeit über dem Oberflächenbereich der Bleche zu verteilen und für einen verbesserten Dampf-Flüssigkeit-Kontakt zu sorgen.

2. Füllkörper nach Anspruch 1,
**dadurch gekennzeichnet, daß**
die Schlitze (22) in benachbarten Reihen in Längsrichtung in einer Linie mit den Abständen zwischen den Schlitzen gegeneinander versetzt sind.

3. Füllkörper nach Anspruch 1 oder Anspruch 2,
**dadurch gekennzeichnet, daß**
jeder Schlitz (22) einen ausgeprägten Bereich aufweist.

## Revendications

1. Grille de garnissage de tour comprenant plusieurs tôles métalliques ondulées (18) en contact face à face, comportant des ondulations opposées (20) inclinées de manière opposée les unes par rapport aux autres pour recevoir un écoulement de liquide descendant simultanément avec un écoulement de vapeur ascendant afin d'améliorer le contact vapeur-liquide entre elles, les tôles (18) comprenant plusieurs ouvertures allongées espacées longitudinalement les unes des autres et en rangées parallèles, les axes longitudinaux des ouvertures s'étendant transversalement aux ondulations afin de répartir le liquide sur les deux faces des tôles, caractérisée en ce que les ouvertures se présentent sous la forme de fentes (22) aptes à produire un effet capillaire provoquant une déviation latérale et un entraînement du liquide descendant sur les tôles, afin de disperser le liquide sur la totalité de la surface des tôles et de produire un meilleur contact vapeur-liquide.

2. Garnissage de tour selon la revendication 1, caractérisé en ce que les fentes (22) disposées en rangées adjacentes sont décalées longitudinalement les unes par rapport aux autres, en alignement avec les espaces compris entre les fentes.

3. Garnissage de tour selon la revendication 1 ou la revendication 2, caractérisé en ce que chacune des fentes (22) comprend une partie repoussée.
